# EUROPEAN PATENT SPECIFICATION

(11) **EP 3 205 562 B1**
(45) Date of publication and mention of the grant of the patent: **14.08.2019**
(21) Application number: 17155646.7
(22) Date of filing: 10.02.2017
(51) Int. Cl.: B62D 35/00

(54) **A DRAG REDUCING SYSTEM FOR TRAILERS**
REIBUNGSVERMINDERUNGSSYSTEM FÜR ANHÄNGER
SYSTÈME DE RÉDUCTION DE TRAÎNÉE POUR REMORQUES

(30) Priority: 11.02.2016 SE 1650179
(43) Date of publication of application: 16.08.2017
(73) Proprietor: Nordicc i Ljungby AB, 341 31 Ljungby (SE)
(72) Inventor: KLINGENBERG, David, 341 42 Ljungby (SE)
(74) Representative: Industripatent i Växjö AB

(56) References cited:
- WO-A1-2014/210360
- DE-A1-102012 015 997
- US-A1- 2013 076 063
- US-B1- 6 257 654

## Description

### Technical field

The present invention relates to a drag reducing system for trailers.

### Background

In aerodynamics, aerodynamic drag is the fluid drag force that acts on any moving solid body in the direction of the fluid freestream flow.

The automotive industry has for a long time been trying to decrease the fuel consumption of vehicles. Among different issues to solve, the aerodynamic drag increases the fuel consumption of vehicles. The aerodynamic drag is indeed a problem which engineers have been trying to solve for different types of vehicles. One of these vehicles are trucks. Trucks often carry a trailer where goods are transported within.

For reducing the drag and thus reducing the fuel consumption of vehicles is one of the most challenging issues within the automotive industry.

For trailers different types of air flow redirection means have been developed. These air flow redirection means, designed and installed correctly, decrease the fuel consumption of vehicles. In certain regions/countries these air flow redirection means, sometimes called boat-tails, have been approved to be used in ordinary traffic. In different regions/countries different sizes of these air flow redirection means have been approved.

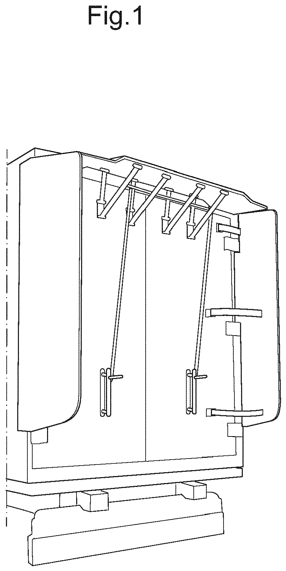

Existing air flow redirection means comprise a lot of different components which implies that the product is rather expensive to manufacture and difficult to install. Furthermore, in order for air flow redirection means to switch between an active and an inactive mode there are additional components needed. In the active mode the air flow redirection means are deployed and reduces the aerodynamic drag. In the inactive mode the air flow redirection means are not deployed, and should preferably not constitute an obstacle when opening the rear doors of the trailer, or when reversing the trailer. Furthermore, the air flow redirection means often get damaged while the truck and trailer is in transit and replacement parts may be expensive. Further, often the airflow redirection means do protrude, either in the active or in the inactive mode, from any of the long sides of the trailer. Having components protruding in such a way will unfortunately increase the fuel consumption of the moving vehicle. Fig. 1 shows a drag reducing system for trailers, wherein the system in the active mode protrudes from both of the long sides of the trailer. The illustrated system thus exemplifies prior art to the described invention in this application.

An additional example of prior art is WO 2014/210360 A1, which discloses a self-deploying, drag reducing system according to the preamble of independent claim 1.

It therefore exists a need for air flow redirection means which comprise relatively few components, and therefore are inexpensive to manufacture, robust and easy to install, and which easily may switch between an active and an inactive mode. In the active mode the air flow redirection means should decrease the fuel consumption of the truck-trailer carriage, and in the inactive mode the air flow redirection means should not constitute an obstacle when opening the rear doors of the trailer, or when reversing the trailer. Further, the air flow redirection means should not protrude, neither in the active nor in the inactive mode, from any of the long sides of the trailer as this will increase the fuel consumption of the moving vehicle.

### Summary of invention

An objective of the present invention is thus to accomplish a drag reducing system for trailers that are inexpensive to manufacture, robust and easy to install, which easily may switch between an active and an inactive mode, wherein in the active mode the air flow redirection means should decrease the fuel consumption of the truck-trailer carriage, and in the inactive mode the air flow redirection means should not constitute an obstacle when opening the rear doors of the trailer, or when reversing the trailer.

According to one aspect, the invention concerns a drag reducing system for trailers comprising a first and a second air flow redirection means, each having a first end part and a second end part. The first and second airflow redirection means respectively extending from its first to its second end part, and a plurality of connection brackets. Wherein the plurality of connection brackets are arranged to be connected to a first and a second rear door of a trailer, and the first and the second airflow redirection means are connected to the plurality of connection brackets. The system is characterised in that the first and the second air flow redirection means comprise a plurality of magnetic connection devices permitting the first and the second airflow redirection means to be kept in an active mode or in an inactive mode. Wherein in the active mode the first airflow redirection means is substantially directed from its first end part towards its second end part away from the first rear door of the trailer. Wherein in the active mode the second air flow redirection means is substantially directed from its first end part towards its second end part away from the second rear door of the trailer. Wherein in the inactive mode the first airflow redirection means is substantially directed from its first end part towards its second end part along the first rear door of the trailer. Wherein in the inactive mode the second airflow redirection means is substantially directed from its first end part towards its second end part along the second rear door of the trailer. Wherein the plurality of magnetic connection devices comprise a first group of magnetic connection devices arranged at a short side at the first end part of each of the first and the second air flow redirection means. The short side extending substantially perpendicular to the extension from the first end part to the second end part, so that the short side of the first end part of the first air flow redirection means is facing the first rear door of the trailer and so that the short side of the first end part of the second air flow redirection means is facing the second rear door of the trailer when the first and the second air flow redirection means are in the active mode, permitting to keep the first and the second airflow redirection means in the active mode.

An advantage with the solution, is by only comprising components such as a first and a second air flow redirection means, a plurality of connection brackets and a plurality of magnetic connection devices the system will be robust, easy to install, not easily damaged, and inexpensive to manufacture. When the trailer for instance is to be reversed and/or when the rear doors of the trailer are to be opened the driver/user should be able to deactivate the air flow redirection means so that the rear doors of the trailer with the air flow redirection means do not constitute a physical or visual obstacle. By comprising a plurality of magnetic connection devices at the air flow redirection means, a user/driver will easily and swiftly be able to switch the air flow redirection means between an active mode and an inactive mode. Furthermore, by comprising a plurality of magnetic connection devices at the air flow redirection means, the air flow redirection means will only protrude, in both the active and the inactive mode, from the rear of the trailer and not from any of the long sides of the trailer. This will be an additional advantage for decreasing the fuel consumption. Further an additional advantage with the solution, is by comprising a first group of magnetic connection devices arranged at a first end part of each of the first and the second air flow redirection means, the air flow redirection means may magnetically interact with the rear doors and thus be kept in the active mode. Further, the air flow redirection means will only protrude, in the active mode, from the rear of the trailer and not from any of the long sides of the trailer. This will be an additional advantage for decreasing the fuel consumption. Further the magnetic interaction between the air flow redirection means and the rear doors may be broken and the air flow redirection means then may easily/swiftly shift away from the active mode.

The above system may be configured according to different optional embodiments. For example, the first group of magnetic connection devices may be arranged at the first end part of the first air flow redirection means for acting with a plurality of hinges of the first rear door of the trailer, when the first air flow redirection means is in the active mode. Wherein the first group of magnetic connection devices are arranged at the first end part of the second air flow redirection means for acting with a plurality of hinges of the second rear door of the trailer, when the second air flow redirection means is in the active mode. Wherein the hinges are hingedly connecting the first and the second rear door of the trailer to a rear part of the trailer.

An advantage with the solution, is by comprising a first group of magnetic connection devices arranged at a short side at the first end part of each of the first and the second air flow redirection means, the air flow redirection means may magnetically interact with the plurality of hinges of the rear doors and thus be kept in the active mode even stronger/more secure than previously described. Further, the air flow redirection means will only protrude, in the active mode, from the rear of the trailer and not from any of the long sides of the trailer. This will be an additional advantage for decreasing the fuel consumption.

According to an embodiment of the invention, the first group of magnetic connection devices may comprise more magnetic material in a lower part of each of the first and the second air flow redirection means than in an upper part of each of the first and the second air flow redirection means. Wherein the lower part of each of the first and the second air flow redirection means is closer to the ground than the upper part of each of the first and the second air flow redirection means when the first and the second air flow redirection means are arranged to the first and the second rear door of the trailer respectively. Permitting a relatively strong magnetic connection between the first air flow redirection means and the plurality of hinges of the first rear door of the trailer and a relatively strong magnetic connection between the second air flow redirection means and the plurality of hinges of the second rear door of the trailer, while permitting a user to more easily disconnect the first and the second air flow redirection means from the active mode.

An advantage with the solution, is by comprising more magnetic material in a lower part of each of the first and the second air flow redirection means than in an upper part of each of the first and the second air flow redirection means, a relatively strong magnetic connection between the first air flow redirection means and the plurality of hinges of the first rear door of the trailer and a relatively strong magnetic connection between the second air flow redirection means and the plurality of hinges of the second rear door of the trailer is achieved. It also permits a user to more easily disconnect the first and the second air flow redirection means from the active mode.

According to an embodiment of the invention, the plurality of magnetic connection devices may comprise a second group of magnetic connection devices arranged at a long side at a second end part of each of the first and the second air flow redirection means. Wherein the second end part of the first air flow redirection means is distal from the first end part of the first air flow redirection means. Wherein the second end part of the second air flow redirection means is distal from the first end part of the second air flow redirection means. Wherein the long side of the first air flow redirection means is facing the first rear door of the trailer when the first air flow redirection means is in the inactive mode. Wherein the long side of the second air flow redirection means is facing the second rear door of the trailer when the second air flow redirection means is in the inactive mode. Permitting to hold the first air flow redirection means towards the first rear door in the inactive mode and to hold the second air flow redirection means towards the second rear door in the inactive mode.

An advantage with the solution, is by comprising a second group of magnetic connection devices arranged at a long side at a second end part of each of the first and the second air flow redirection means, the air flow redirection means may magnetically interact with the rear doors and thus be kept in the inactive mode. Further the magnetic interaction between the air flow redirection means and the rear doors may be broken and the air flow redirection means then may easily/swiftly shift away from the inactive mode.

According to an embodiment of the invention, the plurality of connection brackets may be arranged to be connected to an end part of each of the first and the second rear door of the trailer. Wherein the end part of the first rear door of the trailer is in close proximity of the plurality of hinges of the first rear door of the trailer. Wherein the end part of the second rear door of the trailer is in close proximity of the plurality of hinges of the second rear door of the trailer.

An advantage with the solution, is by having a plurality of connection brackets arranged to be connected to an end part of each of the first and the second rear door of the trailer, the air flow redirection means may shift/swing between the active and the inactive mode by means of the connection brackets. Wherein in the active mode the first air flow redirection means is substantially directed away from the first rear door of the trailer, and wherein in the active mode the second air flow redirection means is substantially directed away from the second rear door of the trailer. Wherein in the inactive mode the first air flow redirection means is substantially directed along the first rear door of the trailer, and wherein in the inactive mode the second air flow redirection means is substantially directed along the second rear door of the trailer. Furthermore, having the connection brackets installed in such a way they will constitute a smaller visual obstacle when viewing the rear doors of the trailer. This might be advantageous as the rear doors of the trailer are often used for displaying corporate logos, texts, etc.

According to an embodiment of the invention, each of the plurality of connection brackets may comprise at least one bend. Permitting the first air flow redirection means to be in close proximity of the first rear door of the trailer and the second air flow redirection means to be in close proximity of the second rear door of the trailer when the first and the second air flow redirection means are in the inactive mode.

An advantage with the solution, by comprising at least one bend at the plurality of connection brackets, permits as mentioned the first air flow redirection means to be in close proximity of the first rear door of the trailer and the second air flow redirection means to be in close proximity of the second rear door of the trailer when the first and the second air flow redirection means are in the inactive mode. This is due to the fact that quite a few of existing trailers comprise rear doors which are not flat but have rear doors which have at least one bend. By comprising a bend or a plurality of bends at the plurality of connection brackets which correspond to a bend or a plurality of bends at the rear doors, facilitates the first and the second air flow redirection means to be in close proximity of the first and the second rear door of the trailer respectively.

According to an embodiment of the invention, each of the first and the second air flow redirection means may comprise a distance device arranged at the second end part of each of the first and the second air flow redirection means. Wherein the distance device creates a distance between the first air flow redirection means and the first rear door of the trailer. Wherein the distance device creates a distance between the second air flow redirection means and the second rear door of the trailer. Wherein the distance device comprises the second group of magnetic connection devices.

An advantage with the solution, by comprising a distance device at the first and the second air flow redirection means arranged at the second end part of each of the first and the second air flow redirection means, the first and the second air flow redirection means will be more robust and easier to grip/shift between the active and the inactive mode by the user/driver. Along the distance device reflective material may be incorporated, in order for drivers in vehicles approaching from behind to more easily detect the protruding air flow redirection means.

According to an embodiment of the invention, the system may comprise at least a first and a second security connection device. Wherein each of the first and the second security connection device may comprise a first part and a second part. Wherein the first part of the first security connection device may be arranged at the first rear door of the trailer. Wherein the second part of the first security connection device may be arranged at the second end part of the first air flow redirection means. Wherein the first part of the second security connection device may be arranged at the second rear door of the trailer. Wherein the second part of the second security connection device may be arranged at the second end part of the second air flow redirection means. Wherein the first security connection device may releasably connect the first air flow redirection means to the first rear door of the trailer in the inactive mode. Wherein the second security connection device may releasably connect the second air flow redirection means to the second rear door of the trailer in the inactive mode.

An advantage with the solution, by comprising at least a first and a second security connection device which releasably connect the first air flow redirection means to the first rear door of the trailer in the inactive mode and which releasably connect the second air flow redirection means to the second rear door of the trailer in the inactive mode, the air flow redirection means will be securely kept within the inactive mode even if the first group of magnetic connection devices stop functioning or are not strong enough to withstand a specific applied force.

According to an embodiment of the invention, the system may comprise a first and a second rotatable security connection device. Wherein each of the first and the second rotatable security connection device may comprise a first end part and a second end part. Wherein the first end part of the first rotatable security connection device may be arranged to be rotatably connected to the first rear door of the trailer. Wherein the first end part of the second rotatable security connection device may be arranged to be rotatably connected to the second rear door of the trailer. Wherein the second end part of the first rotatable security connection device may be releasably connected to the first end part of the first air flow redirection means. Wherein the second end part of the second rotatable security connection device may be releasably connected to the first end part of the second air flow redirection means. Wherein the first rotatable security connection device may releasably connect the first air flow redirection means to the first rear door of the trailer in the inactive mode and in the active mode. Wherein the second rotatable security connection device may releasably connect the second air flow redirection means to the second rear door of the trailer in the inactive mode and in the active mode.

An advantage with the solution, by comprising a first and a second rotatable security connection device, wherein the first rotatable security connection device releasably connects the first air flow redirection means to the first rear door of the trailer in the inactive mode and in the active mode, and wherein the second rotatable security connection device may releasably connect the second air flow redirection means to the second rear door of the trailer in the inactive mode and in the active mode, the air flow redirection means will be securely kept within the active or the inactive mode even if the first or the second group of magnetic connection devices stop functioning or are not strong enough to withstand a specific applied force.

According to an embodiment of the invention, the first and the second air flow redirection means may be quadrangles made out of a sheet metal material such as extruded aluminium.

An advantage with the solution, by having the first and the second air flow redirection means being quadrangles made out of a sheet metal material such as extruded aluminium, the system will be robust, comply to standard industrial production methods, and relatively inexpensive to manufacture.

According to an embodiment of the invention, the first and the second air flow redirection means may be quadrangles made out of a material comprising one or more of the following glass fibre, carbon fibre.

An advantage with the solution, by having the first and the second air flow redirection means being quadrangles made out of a material comprising glass fibre and/or carbon fibre, the system will be robust, comply to standard industrial production methods, and relatively inexpensive to manufacture.

According to an embodiment of the invention, the first and the second air flow redirection means may be quadrangles made out of a material with cutting-outs corresponding to a plurality of protruding hinges of the first and the second rear door.

An advantage with the solution, by having the first and the second air flow redirection means being quadrangles made out of a material with cutting-outs corresponding to a plurality of protruding hinges of the first and the second rear door, is that that the system will be compatible with trailers comprising non-protruding/integrated hinges and with trailers comprising protruding hinges.

According to an embodiment of the invention, the plurality of connection brackets are made out of a sheet metal material such as extruded aluminium.

An advantage with the solution, by having the plurality of connection brackets being made out of a sheet metal material such as extruded aluminium, the system will be robust, comply to standard industrial production methods, and relatively inexpensive to manufacture.

Trailers may have rear doors with integrated hinges or rear doors with non-integrated/protruding hinges. The described system will suit both types of hinges.

If the trailer is widened in any sense, even with a small amount, the aerodynamic drag increases and the fuel consumption thus increases. The system described will not widen the trailer as it does not protrude, neither in the active nor in the inactive mode, from any of the long sides of the trailer.

The plurality of connection brackets comprise a first group of connection brackets, wherein each of the plurality of connection brackets of the first group of connection brackets comprises a first and a second end part, wherein in the first end part of the plurality of connection brackets of the first group of connection brackets the first air flow redirection means is hingedly connected, and wherein the second end part of the plurality of connection brackets of the first group of connection brackets is hingedly connected to the first rear door of the trailer, permitting the first air flow redirection means to shift/swing easily between the active and the inactive mode.

The plurality of connection brackets comprise a second group of connection brackets, wherein each of the plurality of connection brackets of the second group of connection brackets comprises a first and a second end part, wherein in the first end part of the plurality of connection brackets of the second group of connection brackets the second air flow redirection means is hingedly connected, and wherein the second end part of the plurality of connection brackets of the second group of connection brackets is hingedly connected to the second rear door of the trailer, permitting the second air flow redirection means to shift/swing easily between the active and the inactive mode.

The height of the air flow redirection means, when installed, can correspond to the height of the rear doors of the trailer.

In the active mode the air flow redirection means are not fully parallel to the sides of the trailer but are instead slightly angled towards the centre of the trailer. This non parallelism decreases the aerodynamic drag of the trailer when in motion, as the air flow is slightly directed towards the centre of the trailer due to the settings of the air flow redirection means. Thus there is a certain angle created by the projection of the side of the trailer and the projection of the air flow redirection means. Further to this, the first end part of the air flow redirection means, which in the active mode is facing the rear doors of the trailer, can be rounded off. The end part can for this purpose be defined as approximately 100 mm. This rounding off implies that when the vehicle is moving the air flow will more smoothly flow pass the interface between the trailer and the air flow redirection means.

### Brief description of drawings

The invention is now described, by way of example, with reference to the accompanying drawings, in which:
Fig. 1 shows a drag reducing system for trailers in a perspective view, wherein the system in the active mode protrudes from both of the long sides of the trailer, wherein the system exemplifies prior art to the described invention in this application, and
Fig. 2a shows a drag reducing system for trailers in a perspective view, where the system is in the active mode, according to an embodiment of the invention, and
Fig. 2b, shows a drag reducing system for trailers in a perspective view, comprising protruding hinges of the rear doors of the trailer and cutting-outs at the air flow redirection means, where the system is in the active mode, according to an embodiment of the invention, and
Fig. 3, shows a drag reducing system for trailers in a perspective view, where the system is in the inactive mode, according to an embodiment of the invention, and
Fig. 4a, shows a drag reducing system for trailers in a horizontal cross sectional view, wherein the second air flow redirection means is in the inactive mode, according to an embodiment of the invention, and
Fig. 4b, shows a drag reducing system for trailers in a horizontal cross sectional view, wherein the second air flow redirection means is in the active mode, according to an embodiment of the invention, and
Fig. 5, shows a drag reducing system for trailers in a detailed perspective view of the first air flow redirection means, further illustrating e.g. a connection bracket and the first rotatable security connection device, wherein the first air flow redirection means is in the active mode, according to an embodiment of the invention, and
Fig. 6, shows a drag reducing system for trailers in a horizontal cross sectional view, wherein the first airflow redirection means is in the active mode, according to an embodiment of the invention, and
Fig. 7, shows a drag reducing system for trailers in a horizontal cross sectional view, wherein the first and the second airflow redirection means are in the inactive mode, according to an embodiment of the invention, and
Fig. 8, shows a drag reducing system for trailers in a horizontal cross sectional view, wherein the first and the second airflow redirection means are in the active mode, according to an embodiment of the invention.

### Description of embodiments

In the following, a detailed description of a drag reducing system for trailers is provided.

Fig. 1 shows a drag reducing system for trailers, wherein the system in the active mode protrudes from both of the long sides of the trailer, wherein the system exemplifies prior art to the described invention in this application.

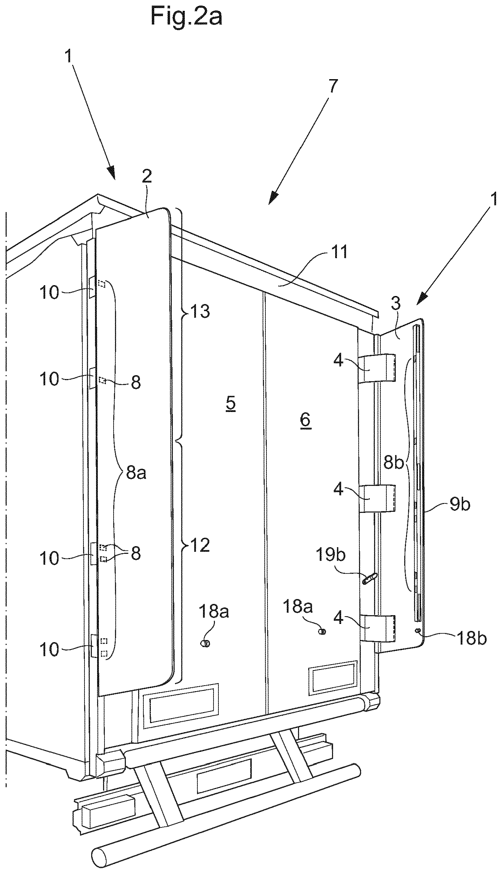

Fig. 2a shows a drag reducing system for trailers 1, according to an embodiment of the invention, comprising a first 2 and a second air flow redirection means 3, and a plurality of connection brackets 4, wherein the plurality of connection brackets 4 are arranged to be connected to a first 5 and a second rear door 6 of a trailer 7, and the first 2 and the second air flow redirection means 3 are connected to the plurality of connection brackets 4. Further the first 2 and the second airflow redirection means 3 comprise a plurality of magnetic connection devices 8 permitting the first 2 and the second airflow redirection means 3 to be kept in an active mode or in an inactive mode. Wherein in the active mode the first air flow redirection means 2 is substantially directed away from the first rear door 5 of the trailer 7, and wherein in the active mode the second air flow redirection means 3 is substantially directed away from the second rear door 6 of the trailer 7, and wherein in the inactive mode the first airflow redirection means 2 is substantially directed along the first rear door 5 of the trailer 7, and wherein in the inactive mode the second airflow redirection means 3 is substantially directed along the second rear door 6 of the trailer 7. Further the plurality of magnetic connection devices 8 comprise a first group 8a of magnetic connection devices 8. Further the first 5 and the second rear door 6 comprise a plurality of hinges 10. Further the first group 8a of magnetic connection devices 8 comprises more magnetic material in a lower part 12 of each of the first 2 and the second airflow redirection means 3 than in an upper part 13 of each of the first 2 and the second airflow redirection means. Wherein the lower part 12 of each of the first 2 and the second airflow redirection means 3 is closer to the ground than the upper part 13 of each of the first 2 and the second air flow redirection means 3 when the first 2 and the second air flow redirection means 3 are arranged to the first 5 and the second rear door 6 of the trailer 7 respectively. Permitting a relatively strong magnetic connection between the first airflow redirection means 2 and the plurality of hinges 10 of the first rear door 5 of the trailer 7 and a relatively strong magnetic connection between the second air flow redirection means 3 and the plurality of hinges 10 of the second rear door 6 of the trailer 7 while permitting a user to more easily disconnect the first 2 and the second air flow redirection means 3 from the active mode. Further the plurality of magnetic connection devices 8 comprise a second group 8b of magnetic connection devices 8 arranged at a second end part 9b of each of the first 2 and the second air flow redirection means 3. Further a second rotatable security connection device 19b is shown.

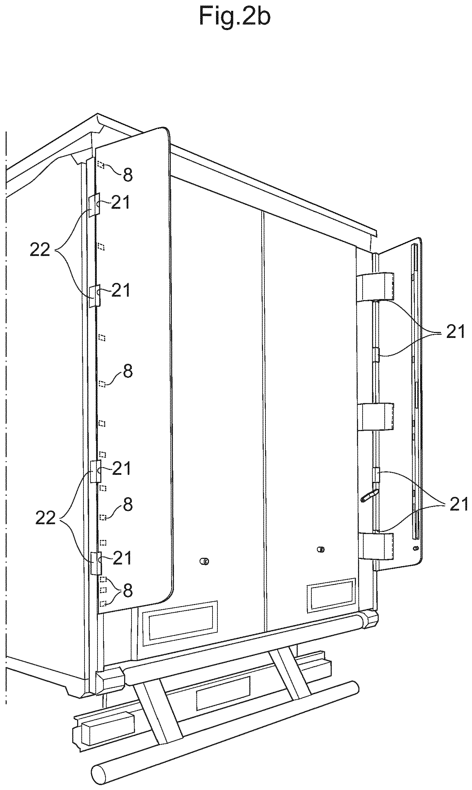

Fig. 2b shows a drag reducing system for trailers 1, according to an embodiment of the invention, wherein the first 2 and the second air flow redirection means 3 are quadrangles made out of a material with cutting-outs 21 corresponding to a plurality of protruding hinges 22 of the first 5 and the second rear door 6.

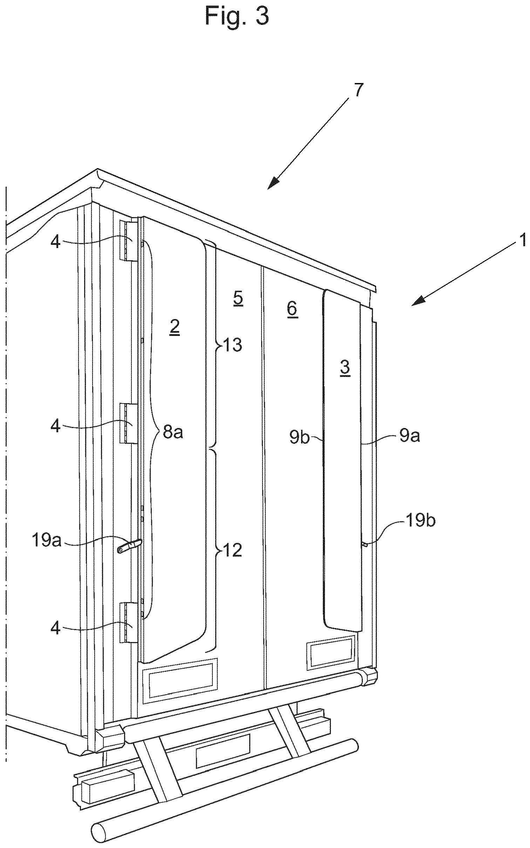

Fig. 3 shows a drag reducing system for trailers 1, according to an embodiment of the invention, comprising a first end part 9a of each of the first 2 and the second air flow redirection means 3. Wherein the first end part 9a of the first air flow redirection means 2 is facing the first rear door 5 of the trailer 7. Wherein the first end part 9a of the second air flow redirection means 3 is facing the second rear door 6 of the trailer 7 when the first 2 and the second air flow redirection means 3 are in the active mode. Permitting to keep the first 2 and the second airflow redirection means 3 in the active mode. Further comprising a first 19a and a second rotatable security connection device 19b. Wherein the first rotatable security connection device 19a releasably connects the first airflow redirection means 2 to the first rear door 5 of the trailer 7 in the inactive mode. Wherein the second rotatable security connection device 19b releasably connects the second air flow redirection means 3 to the second rear door 6 of the trailer 7 in the inactive mode.

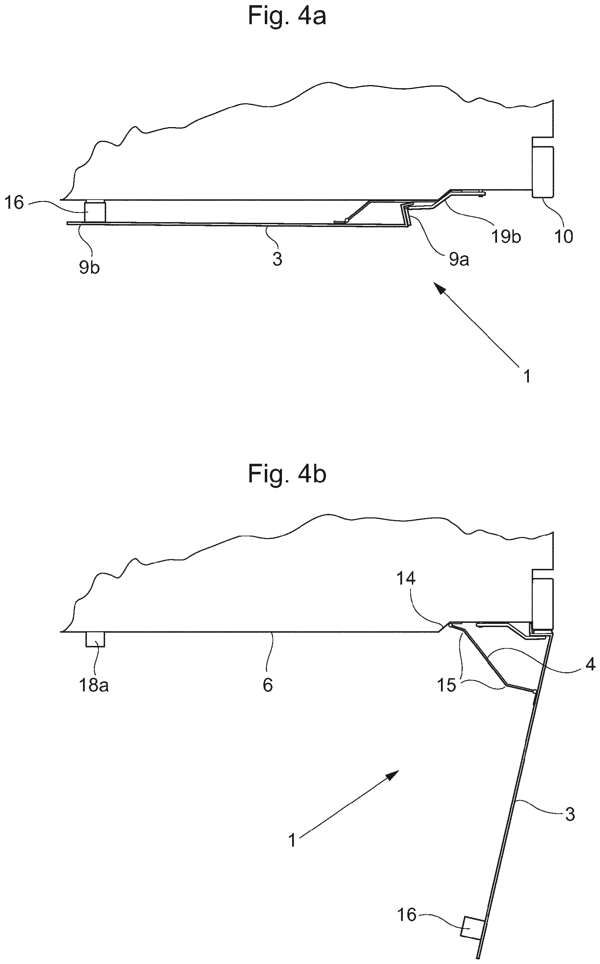

Fig. 4a shows a drag reducing system for trailers 1, according to an embodiment of the invention, wherein the second airflow redirection means 3 comprises a distance device 16 arranged at the second end part 9b of the second air flow redirection means 3. Wherein the distance device 16 creates a distance between the second air flow redirection means 3 and the second rear door 6 of the trailer 7. Further comprising a second rotatable security connection device 19b. Further the second rear door 6 comprises a plurality of hinges 10.

Fig. 4b shows a drag reducing system for trailers 1, according to an embodiment of the invention, wherein the plurality of connection brackets 4 are arranged to be connected to an end part 14 of the second rear door 6 of the trailer 7. Wherein the end part 14 of the second rear door 6 of the trailer 7 is in close proximity of the plurality of hinges 10 of the second rear door 6 of the trailer 7. Further each of the plurality of connection brackets 4 comprises at least one bend 15, permitting the second airflow redirection means 3 to be in close proximity of the second rear door 6 of the trailer 7 when the second air flow redirection means 3 are in the inactive mode.

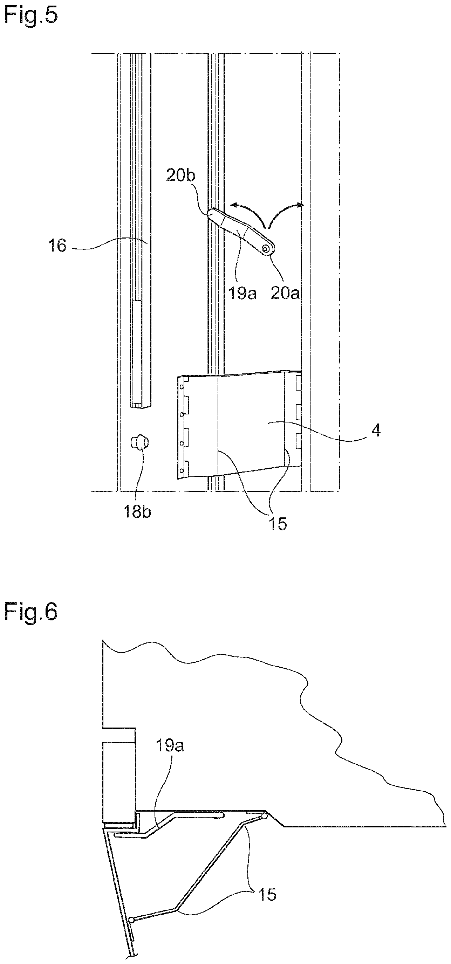

Fig. 5 shows a drag reducing system for trailers 1, according to an embodiment of the invention, comprising a first rotatable security connection device 19a, wherein the first rotatable security connection device 19a comprises a first end part 20a and a second end part 20b. Wherein the first end part 20a of the first rotatable security connection device 19a is arranged to be rotatably connected to the first rear door 5 of the trailer 7. Wherein the second end part 20b of the first rotatable security connection device 19a is releasably connected to the first end part 9a of the first air flow redirection means (2). Wherein the first rotatable security connection device 19a releasably connects the first airflow redirection means 2 to the first rear door 5 of the trailer 7 in the active mode.

Fig. 6 shows a drag reducing system for trailers 1, according to an embodiment of the invention, comprising a first rotatable security connection device 19a. Further each of the plurality of connection brackets 4 comprises at least one bend 15, permitting the first air flow redirection means 2 to be in close proximity of the first rear door 5 of the trailer 7 when the first air flow redirection means 2 are in the inactive mode.

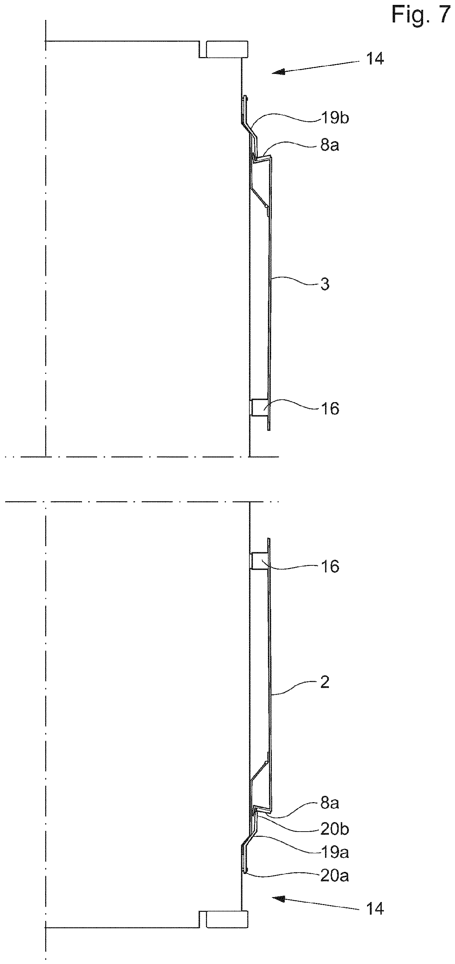

Fig. 7 shows a drag reducing system for trailers 1, according to an embodiment of the invention, comprising a first 19a and a second rotatable security connection device 19b. Wherein the first rotatable security connection device 19a releasably connects the first airflow redirection means 2 to the first rear door 5 of the trailer 7 in the inactive mode. Wherein the second rotatable security connection device 19b releasably connects the second air flow redirection means 3 to the second rear door 6 of the trailer 7 in the inactive mode.

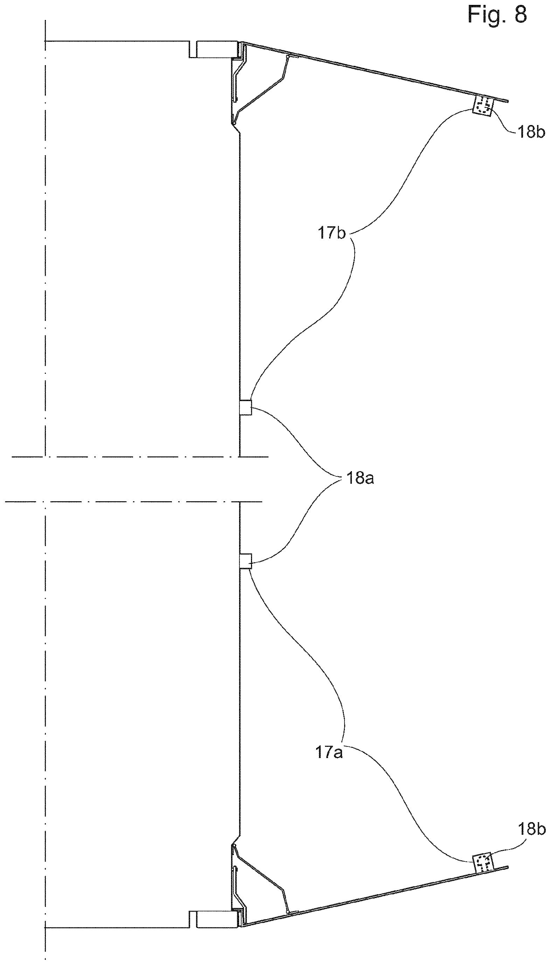

Fig. 8 shows a drag reducing system for trailers 1, according to an embodiment of the invention, comprising a first 17a and a second security connection device 17b. Wherein each of the first 17a and the second security connection device 17b comprises a first part 18a and a second part 18b. Wherein the first part 18a of the first security connection device 17a is arranged at the first rear door 5 of the trailer 7. Wherein the second part 18b of the first security connection device 17a is arranged at the second end part 9b of the first airflow redirection means 2. Wherein the first part 18a of the second security connection device 17b is arranged at the second rear door 6 of the trailer 7. Wherein the second part 18b of the second security connection device 17b is arranged at the second end part 9b of the second air flow redirection means. Wherein the first security connection device 17a releasably connects the first air flow redirection means 2 to the first rear door 5 of the trailer 7 in the inactive mode. Wherein the second security connection device 17b releasably connects the second air flow redirection means 3 to the second rear door 6 of the trailer 7 in the inactive mode.

## Claims

1. A drag reducing system for trailers (1) comprising a first (2) and a second air flow redirection means (3), each having a first end part (9a) and a second end part (9b), wherein the first (1) and second air flow redirection means (3) respectively extending from its first (9a) to its second end part (9b), and a plurality of connection brackets (4), wherein the plurality of connection brackets (4) are arranged to be connected to a first (5) and a second rear door (6) of a trailer (7), and the first (2) and the second air flow redirection means (3) are connected to the plurality of connection brackets (4), wherein the first (2) and the second air flow redirection means (3) comprise a plurality of magnetic connection devices (8) permitting the first (2) and the second air flow redirection means (3) to be kept in an active mode or in an inactive mode, wherein in the active mode the first air flow redirection means (2) is substantially directed from its first end part (9a) towards its second end part (9b) away from the first rear door (5) of the trailer (7), and wherein in the active mode the second air flow redirection means (3) is substantially directed from its first end part (9a) towards its second end part (9b) away from the second rear door (6) of the trailer (7), and wherein in the inactive mode the first air flow redirection means (2) is substantially directed from its first end part (9a) towards its second end part (9b) along the first rear door (5) of the trailer (7), and wherein in the inactive mode the second air flow redirection means (3) is substantially directed from its first end part (9a) towards its second end part (9b) along the second rear door (6) of the trailer (7), **characterised in that** the plurality of magnetic connection devices (8) comprise a first group (8a) of magnetic connection devices (8) arranged at a short side at the first end part (9a) of each of the first (2) and the second air flow redirection means (3), the short side extending substantially perpendicular to the extension from the first end part (9a) to the second end part (9b), so that the short side of the first end part (9a) of the first air flow redirection means (2) is facing the first rear door (5) of the trailer (7) and so that the short side of the first end part (9a) of the second air flow redirection means (3) is facing the second rear door (6) of the trailer (7) when the first (2) and the second air flow redirection means (3) are in the active mode, permitting to keep the first (2) and the second air flow redirection means (3) in the active mode.

2. A drag reducing system for trailers (1) according to claim 1, wherein the first group (8a) of magnetic connection devices (8) are arranged at the first end part (9a) of the first air flow redirection means (2) for acting with a plurality of hinges (10) of the first rear door (5) of the trailer (7), when the first air flow redirection means (2) is in the active mode, and wherein the first group (8a) of magnetic connection devices (8) are arranged at the first end part (9a) of the second air flow redirection means (3) for acting with a plurality of hinges (10) of the second rear door (6) of the trailer (7), when the second air flow redirection means (3) is in the active mode, wherein the hinges (10) are hingedly connecting the first (5) and the second rear door (6) of the trailer (7) to a rear part (11) of the trailer (7).

3. A drag reducing system for trailers (1) according to any of the claims 1-2, wherein the first group (8a) of magnetic connection devices (8) comprises more magnetic material in a lower part (12) of each of the first (2) and the second air flow redirection means (3) than in an upper part (13) of each of the first (2) and the second air flow redirection means (3), wherein the lower part (12) of each of the first (2) and the second airflow redirection means (3) is closer to the ground than the upper part (13) of each of the first (2) and the second air flow redirection means (3) when the first (2) and the second air flow redirection means (3) are arranged to the first (5) and the second rear door (6) of the trailer (7) respectively, permitting a relatively strong magnetic connection between the first air flow redirection means (2) and the plurality of hinges (10) of the first rear door (5) of the trailer (7) and a relatively strong magnetic connection between the second air flow redirection means (3) and the plurality of hinges (10) of the second rear door (6) of the trailer (7) while permitting a user to more easily disconnect the first (2) and the second air flow redirection means (3) from the active mode.

4. A drag reducing system for trailers (1) according to any of the claims 1-3, wherein the plurality of magnetic connection devices (8) comprise a second group (8b) of magnetic connection devices (8) arranged at a long side at a second end part (9b) of each of the first (2) and the second air flow redirection means (3), wherein the second end part (9b) of the first air flow redirection means (2) is distal from the first end part (9a) of the first air flow redirection means (2), and wherein the second end part (9b) of the second air flow redirection means (3) is distal from the first end part (9a) of the second air flow redirection means (3), and wherein the long side of the first air flow redirection means (2) is facing the first rear door (5) of the trailer (7) when the first air flow redirection means (2) is in the inactive mode, and wherein the long side of the second air flow redirection means (3) is facing the second rear door (6) of the trailer (7) when the second air flow redirection means (3) is in the inactive mode, permitting to hold the first air flow redirection means (2) towards the first rear door (5) in the inactive mode and to hold the second air flow redirection means (3) towards the second rear door (6) in the inactive mode.

5. A drag reducing system for trailers (1) according to any of the claims 1-4, wherein the plurality of connection brackets (4) are arranged to be connected to an end part (14) of each of the first (5) and the second rear door (6) of the trailer (7), wherein the end part (14) of the first rear door (5) of the trailer (7) is in close proximity of the plurality of hinges (10) of the first rear door (5) of the trailer (7), and wherein the end part (14) of the second rear door (6) of the trailer (7) is in close proximity of the plurality of hinges (10) of the second rear door (6) of the trailer (7).

6. A drag reducing system for trailers (1) according to any of the claims 1-5, wherein each of the plurality of connection brackets (4) comprises at least one bend (15), permitting the first air flow redirection means (2) to be in close proximity of the first rear door (5) of the trailer (7) and the second air flow redirection means (3) to be in close proximity of the second rear door (6) of the trailer (7) when the first (2) and the second air flow redirection means (3) are in the inactive mode.

7. A drag reducing system for trailers (1) according to any of the claims 1-6, wherein each of the first (2) and the second air flow redirection means (3) comprises a distance device (16) arranged at the second end part (9b) of each of the first (2) and the second air flow redirection means (3), wherein the distance device (16) creates a distance between the first air flow redirection means (2) and the first rear door (5) of the trailer (7), and wherein the distance device (16) creates a distance between the second air flow redirection means (3) and the second rear door (6) of the trailer (7), and wherein the distance device (16) comprises the second group (8b) of magnetic connection devices (8).

8. A drag reducing system for trailers (1) according to any of the claims 1-7, comprising at least a first (17a) and a second security connection device (17b), wherein each of the first (17a) and the second security connection device (17b) comprises a first part (18a) and a second part (18b), and wherein the first part (18a) of the first security connection device (17a) is arranged at the first rear door (5) of the trailer (7), and wherein the second part (18b) of the first security connection device (17a) is arranged at the second end part (9b) of the first air flow redirection means (2), and wherein the first part (18a) of the second security connection device (17b) is arranged at the second rear door (6) of the trailer (7), and wherein the second part (18b) of the second security connection device (17b) is arranged at the second end part (9b) of the second air flow redirection means (3), wherein the first security connection device (17a) releasably connects the first air flow redirection means (2) to the first rear door (5) of the trailer (7) in the inactive mode, and wherein the second security connection device (17b) releasably connects the second air flow redirection means (3) to the second rear door (6) of the trailer (7) in the inactive mode.

9. A drag reducing system for trailers (1) according to any of the claims 1-8, comprising a first (19a) and a second rotatable security connection device (19b), wherein each of the first (19a) and the second rotatable security connection device (19b) comprises a first end part (20a) and a second end part (20b), and wherein the first end part (20a) of the first rotatable security connection device (19a) is arranged to be rotatably connected to the first rear door (5) of the trailer (7), and wherein the first end part (20a) of the second rotatable security connection device (19b) is arranged to be rotatably connected to the second rear door (6) of the trailer (7), and wherein the second end part (20b) of the first rotatable security connection device (19a) is releasably connected to the first end part (9a) of the first air flow redirection means (2), and wherein the second end part (20b) of the second rotatable security connection device (19b) is releasably connected to the first end part (9a) of the second air flow redirection means (3), wherein the first rotatable security connection device (19a) releasably connects the first airflow redirection means (2) to the first rear door (5) of the trailer (7) in the inactive mode and in the active mode, wherein the second rotatable security connection device (19b) releasably connects the second airflow redirection means (3) to the second rear door (6) of the trailer (7) in the inactive mode and in the active mode.

10. A drag reducing system for trailers (1) according to any of the claims 1-9, wherein the first (2) and the second airflow redirection means (3) are quadrangles made out of a sheet metal material such as extruded aluminium.

11. A drag reducing system for trailers (1) according to any of the claims 1-10, wherein the first (2) and the second airflow redirection means (3) are quadrangles made out of a material comprising one or more of the following glass fibre, carbon fibre.

12. A drag reducing system for trailers (1) according to any of the claims 1-11, wherein the first (2) and the second air flow redirection means (3) are quadrangles with cutting-outs (21) corresponding to a plurality of protruding hinges (22) of the first (5) and the second rear door (6).

13. A drag reducing system for trailers (1) according to any of the claims 1-12, wherein the plurality of connection brackets (4) are made out of a sheet metal material such as extruded aluminium.

## Patentansprüche

1. Luftwiderstandsverminderungssystem für Anhänger (1), umfassend ein erstes (2) und eine zweites Luftstrom-Umleitungsmittel (3), die jeweils einen ersten Endteil (9a) und einen zweiten Endteil (9b) aufweisen, wobei sich das erste (1) und zweite Luftstrom-Umleitungsmittel (3) jeweils von seinem ersten (9a) zu seinem zweiten Endteil (9b) erstreckt, und eine Vielzahl von Verbindungsklammern (4), wobei die Vielzahl von Verbindungsklammern (4) so angeordnet sind, um mit einer ersten (5) und einer zweiten hinteren Tür (6) eines Anhängers (7) verbunden zu werden, und das erste (2) und das zweite Luftstrom-Umleitungsmittel (3) mit der Vielzahl von Verbindungsklammern (4) verbunden sind, wobei das erste (2) und das zweite Luftstrom-Umleitungsmittel (3) eine Vielzahl von magnetischen Verbindungsvorrichtungen (8) umfassen, die es ermöglichen, das erste (2) und das zweite Luftstrom-Umleitungsmittel (3) in einem aktiven Modus oder in einem inaktiven Modus zu halten, wobei im aktiven Modus das erste Luftstrom-Umleitungsmittel (2) im Wesentlichen von seinem ersten Endteil (9a) zu seinem zweiten Endteil (9b) hinweg von der ersten hinteren Tür (5) des Anhängers (7) ausgerichtet ist, und wobei im aktiven Modus das zweite Luftstrom-Umleitungsmittel (3) im Wesentlichen von seinem ersten Endteil (9a) zu seinem zweiten Endteil (9b) hinweg von der zweiten hinteren Tür (6) des Anhängers (7) ausgerichtet ist, und wobei im inaktiven Modus das erste Luftstrom-Umleitungsmittel (2) im Wesentlichen von seinem ersten Endteil (9a) zu seinem zweiten Endteil (9b) entlang der ersten hinteren Tür (5) des Anhängers (7) ausgerichtet ist, und wobei im inaktiven Modus das zweite Luftstrom-Umleitungsmittel (3) im Wesentlichen von seinem ersten Endteil (9a) zu seinem zweiten Endteil (9b) entlang der zweiten hinteren Tür (6) des Anhängers (7) ausgerichtet ist,
**dadurch gekennzeichnet, dass** die Vielzahl von magnetischen Verbindungsvorrichtungen (8) eine erste Gruppe (8a) von magnetischen Verbindungsvorrichtungen (8) umfasst, die an einer kurzen Seite am ersten Endteil (9a) jedes der ersten (2) und der zweiten Luftstrom-Umleitungsmittel (3) angeordnet sind, wobei sich die kurze Seite im Wesentlichen senkrecht zu der Verlängerung vom ersten Endteil (9a) zum zweiten Endteil (9b) erstreckt, so dass die kurze Seite des ersten Endteils (9a) des ersten Luftstrom-Umleitungsmittels (2) der ersten hinteren Tür (5) des Anhängers (7) zugewandt ist und so, dass die kurze Seite des ersten Endteils (9a) des zweiten Luftstrom-Umleitungsmittels (3) der zweiten hinteren Tür (6) des Anhängers (7) zugewandt ist, wenn das erste (2) und das zweite Luftstrom-Umleitungsmittel (3) im aktiven Modus sind, wodurch es möglich ist, das erste (2) und das zweite Luftstrom-Umleitungsmittel (3) im aktiven Modus zu halten.

2. Luftwiderstandsverminderungssystem für Anhänger (1) nach Anspruch 1, wobei die erste Gruppe (8a) von magnetischen Verbindungsvorrichtungen (8) am ersten Endteil (9a) des ersten Luftstrom-Umleitungsmittels (2) so angeordnet ist, um mit einer Vielzahl von Scharnieren (10) der ersten hinteren Tür (5) des Anhängers (7) zusammenzuwirken, wenn sich das erste Luftstrom-Umleitungsmittel (2) im aktiven Modus befindet, und wobei die erste Gruppe (8a) von magnetischen Verbindungsvorrichtungen (8) am ersten Endteil (9a) des zweiten Luftstrom-Umleitungsmittels (3) so angeordnet ist, um mit einer Vielzahl von Scharnieren (10) der zweiten hinteren Tür (6) des Anhängers (7) zusammenzuwirken, wenn sich das zweite Luftstrom-Umleitungsmittel (3) im aktiven Modus befindet, wobei die Scharniere (10) schwenkbar die erste (5) und die zweite hintere Tür (6) des Anhängers (7) mit einem hinteren Teil (11) des Anhängers (7) verbinden.

3. Luftwiderstandsverminderungssystem für Anhänger (1) nach einem der Ansprüche 1-2, wobei die erste Gruppe (8a) von magnetischen Verbindungsvorrichtungen (8) mehr magnetisches Material in einem unteren Teil (12) jedes ersten (2) und zweiten Luftstrom-Umleitungsmittels (3) umfasst als in einem oberen Teil (13) jedes ersten (2) und zweiten Luftstrom-Umleitungsmittels (3), wobei der untere Teil (12) jedes ersten (2) und zweiten Luftstrom-Umleitungsmittels (3) näher am Boden liegt als der obere Teil (13) jedes ersten (2) und zweiten Luftstrom-Umleitungsmittels (3), wenn das erste (2) und zweite Luftstrom-Umleitungsmittel (3) an der ersten (5) und der zweiten hinteren Tür (6) des Anhängers (7) angeordnet sind, und eine relativ starke magnetische Verbindung zwischen dem ersten Luftstrom-Umleitungsmittel (2) und der Vielzahl von Scharnieren (10) der ersten hinteren Tür (5) des Anhängers (7) und eine relativ starke magnetische Verbindung zwischen dem zweiten Luftstrom-Umleitungsmittel (3) und der Vielzahl von Scharnieren (10) der zweiten hinteren Tür (6) des Anhängers (7) ermöglichen, während ein Benutzer das erste (2) und das zweite Luftstrom-Umleitungsmittel (3) leichter vom aktiven Modus trennen kann.

4. Luftwiderstandsverminderungssystem für Anhänger (1) nach einem der Ansprüche 1-3, wobei die Vielzahl von magnetischen Verbindungsvorrichtungen (8) eine zweite Gruppe (8b) von magnetischen Verbindungsvorrichtungen (8) umfasst, die an einer langen Seite an einem zweiten Endteil (9b) jedes ersten (2) und zweiten Luftstrom-Umleitungsmittels (3) angeordnet sind, wobei der zweite Endteil (9b) des ersten Luftstrom-Umleitungsmittels (2) distal vom ersten Endteil (9a) des ersten Luftstrom-Umleitungsmittels (2) ist, und wobei der zweite Endteil (9b) des zweiten Luftstrom-Umleitungsmittels (3) distal vom ersten Endteil (9a) des zweiten Luftstrom-Umleitungsmittels (3) ist, und wobei die lange Seite des ersten Luftstrom-Umleitungsmittels (2) der ersten hinteren Tür (5) des Anhängers (7) zugewandt ist, wenn das erste Luftstrom-Umleitungsmittel (2) im inaktiven Modus ist, und wobei die lange Seite des zweiten Luftstrom-Umleitungsmittels (3) der zweiten hinteren Tür (6) des Anhängers (7) zugewandt ist, wenn sich das zweite Luftstrom-Umleitungsmittel (3) im inaktiven Modus befindet, was es ermöglicht, das erste Luftstrom-Umleitungsmittel (2) in dem inaktiven Modus an der ersten hinteren Tür (5) zu halten und das zweite Luftstrom-Umleitungsmittel (3) im inaktiven Modus an der zweiten hinteren Tür (6) zu halten.

5. Luftwiderstandsverminderungssystem für Anhänger (1) nach einem der Ansprüche 1-4, wobei die Vielzahl von Verbindungsklammern (4) so angeordnet ist, um mit einem Endteil (14) von jedem der ersten (5) und der zweiten hinteren Tür (6) des Anhängers (7) verbunden zu werden, wobei das Endteil (14) der ersten hinteren Tür (5) des Anhängers (7) in unmittelbarer Nähe der Vielzahl von Scharnieren (10) der ersten hinteren Tür (5) des Anhängers (7) liegt, und wobei das Endteil (14) der zweiten hinteren Tür (6) des Anhängers (7) in unmittelbarer Nähe der Vielzahl von Scharnieren (10) der zweiten hinteren Tür (6) des Anhängers (7) liegt.

6. Luftwiderstandsverminderungssystem für Anhänger (1) nach einem der Ansprüche 1-5, wobei jeder der Vielzahl von Verbindungsklammern (4) mindestens eine Krümmung (15) aufweist, die es ermöglicht, dass sich das erste Luftstrom-Umleitungsmittel (2) in unmittelbarer Nähe der ersten hinteren Tür (5) des Anhängers (7) und das zweite Luftstrom-Umleitungsmittel (3) in unmittelbarer Nähe der zweiten hinteren Tür (6) des Anhängers (7) befindet, wenn das erste (2) und das zweite Luftstrom-Umleitungsmittel (3) im inaktiven Modus sind.

7. Luftwiderstandsverminderungssystem für Anhänger (1) nach einem der Ansprüche 1-6, wobei jedes der ersten (2) und zweiten Luftstrom-Umleitungsmittel (3) eine Abstandsvorrichtung (16) umfasst, die am zweiten Endteil (9b) jedes ersten (2) und zweiten Luftstrom-Umleitungsmittels (3) angeordnet ist, wobei die Abstandsvorrichtung (16) einen Abstand zwischen dem ersten Luftstrom-Umleitungsmittel (2) und der ersten hinteren Tür (5) des Anhängers (7) erzeugt, und wobei die Abstandsvorrichtung (16) einen Abstand zwischen dem zweiten Luftstrom-Umleitungsmittel (3) und der zweiten hinteren Tür (6) des Anhängers (7) erzeugt, und wobei die Abstandsvorrichtung (16) die zweite Gruppe (8b) von magnetischen Verbindungsvorrichtungen (8) umfasst.

8. Luftwiderstandsverminderungssystem für Anhänger (1) nach einem der Ansprüche 1-7, umfassend mindestens eine erste (17a) und eine zweite Sicherheitsverbindungsvorrichtung (17b), wobei jede erste (17a) und zweite Sicherheitsverbindungsvorrichtung (17b) einen ersten Teil (18a) und einen zweiten Teil (18b) umfasst, und wobei der erste Teil (18a) der ersten Sicherheitsverbindungsvorrichtung (17a) an der ersten hinteren Tür (5) des Anhängers (7) angeordnet ist, und wobei der zweite Teil (18b) der ersten Sicherheitsverbindungsvorrichtung (17a) an dem zweiten Endteil (9b) des ersten Luftstrom-Umleitungsmittels (2) angeordnet ist, und wobei der erste Teil (18a) der zweiten Sicherheitsverbindungsvorrichtung (17b) an der zweiten hinteren Tür (6) des Anhängers (7) angeordnet ist, und wobei der zweite Teil (18b) der zweiten Sicherheitsverbindungsvorrichtung (17b) an dem zweiten Endteil (9b) des zweiten Luftstrom-Umleitungsmittels (3) angeordnet ist, wobei die erste Sicherheitsverbindungsvorrichtung (17a) das erste Luftstrom-Umleitungsmittel (2) lösbar mit der ersten hinteren Tür (5) des Anhängers (7) im inaktiven Modus verbindet, und wobei die zweite Sicherheitsverbindungsvorrichtung (17b) das zweite Luftstrom-Umleitungsmittel (3) im inaktiven Modus lösbar mit der zweiten hinteren Tür (6) des Anhängers (7) verbindet.

9. Luftwiderstandsverminderungssystem für Anhänger (1) nach einem der Ansprüche 1-8, umfassend eine erste (19a) und eine zweite drehbare Sicherheitsverbindungsvorrichtung (19b), wobei jede erste (19a) und der zweite drehbare Sicherheitsverbindungsvorrichtung (19b) einen ersten Endteil (20a) und einen zweiten Endteil (20b) umfasst, und wobei das erste Endteil (20a) der ersten drehbaren Sicherheitsverbindungsvorrichtung (19a) so angeordnet ist, um drehbar mit der ersten hinteren Tür (5) des Anhängers (7) verbunden zu werden, und wobei der erste Endteil (20a) der zweiten drehbaren Sicherheitsverbindungsvorrichtung (19b) so angeordnet ist, um drehbar mit der zweiten hinteren Tür (6) des Anhängers (7) verbunden zu werden, und wobei der zweite Endteil (20b) der ersten drehbaren Sicherheitsverbindungsvorrichtung (19a) lösbar mit dem ersten Endteil (9a) des ersten Luftstrom-Umleitungsmittels (2) verbunden ist, und wobei der zweite Endteil (20b) der zweiten drehbaren Sicherheitsanschlussvorrichtung (19b) lösbar mit dem ersten Endteil (9a) des zweiten Luftstrom-Umleitungsmittels (3) verbunden ist, wobei die erste drehbare Sicherheitsverbindungsvorrichtung (19a) das erste Luftstrom-Umleitungsmittel (2) im inaktiven Modus und im aktiven Modus lösbar mit der ersten hinteren Tür (5) des Anhängers (7) verbindet, wobei die zweite drehbare Sicherheitsverbindungsvorrichtung (19b) das zweite Luftstrom-Umleitungsmittel (3) im inaktiven Modus und im aktiven Modus lösbar mit der zweiten hinteren Tür (6) des Anhängers (7) verbindet.

10. Luftwiderstandsverminderungssystem für Anhänger (1) nach einem der Ansprüche 1-9, wobei das erste (2) und das zweite Luftstrom-Umleitungsmittel (3) Quadrate sind, die aus einem Blechmaterial, beispielsweise extrudiertem Aluminium, hergestellt sind.

11. Luftwiderstandsverminderungssystem für Anhänger (1) nach einem der Ansprüche 1-10, wobei das erste (2) und das zweite Luftstrom-Umleitungsmittel (3) Quadrate sind, die aus einem Material hergestellt sind, das eine oder mehrere der folgenden Glasfasern, Kohlefasern, umfasst.

12. Luftwiderstandsverminderungssystem für Anhänger (1) nach einem der Ansprüche 1-11, wobei das erste (2) und das zweite Luftstrom-Umleitungsmittel (3) Quadrate mit Ausschnitten (21) sind, die einer Vielzahl von hervorstehenden Scharnieren (22) der ersten (5) und der zweiten hinteren Tür (6) entsprechen.

13. Luftwiderstandsverminderungssystem für Anhänger (1) nach einem der Ansprüche 1-12, wobei die Vielzahl von Verbindungsklammern (4) aus einem Blechmaterial, beispielsweise extrudiertem Aluminium, hergestellt sind.

## Revendications

1. Système de réduction de traînée pour remorques (1) comprenant un premier (2) et un second moyen de redirection d'écoulement d'air (3) présentant chacun une première partie d'extrémité (9a) et une seconde partie d'extrémité (9b), dans lequel le premier (2) et le second moyen de redirection d'écoulement d'air (3) s'étendent respectivement de sa première (9a) à sa seconde partie d'extrémité (9b), et plusieurs ferrures d'assemblage (4), lesdites plusieurs ferrures d'assemblage (4) étant agencées pour être connectées à une première (5) et une seconde portes arrière (6) d'une remorque (7) et les premier (2) et second moyen de redirection d'écoulement d'air (3) étant connectés auxdites plusieurs ferrures d'assemblage (4), le premier (2) et le second moyen de redirection d'écoulement d'air (3) comprenant plusieurs dispositifs de liaison magnétique (8) permettant au premier (2) et au second moyen de redirection d'écoulement d'air (3) d'être maintenus dans un mode actif ou dans un mode inactif, dans lequel, dans le mode actif, le premier moyen de redirection d'écoulement d'air (2) est essentiellement dirigé de sa première partie d'extrémité (9a) vers sa seconde partie d'extrémité (9b) en s'éloignant de la première porte arrière (5) de la remorque (7), et dans lequel, dans le mode actif, le second moyen de redirection d'écoulement d'air (3) est essentiellement dirigé de sa première partie d'extrémité (9a) vers sa seconde partie d'extrémité (9b) en s'éloignant de la seconde porte arrière (6) de la remorque (7), et dans lequel, dans le mode inactif, le premier moyen de redirection d'écoulement d'air (2) est essentiellement dirigé de sa première partie d'extrémité (9a) vers sa seconde partie d'extrémité (9b) le long de la première porte arrière (5) de la remorque (7) et dans lequel, dans le mode inactif, le second moyen de redirection d'écoulement d'air (3) est essentiellement dirigé de sa première partie d'extrémité (9a) vers sa seconde partie d'extrémité (9b) le long de la seconde porte arrière (6) de la remorque (7), **caractérisé en ce que** lesdits plusieurs dispositifs de liaison magnétique (8) comprennent un premier groupe (8a) de dispositifs de liaison magnétique (8) agencés à l'endroit d'un côté court à l'endroit de la première partie d'extrémité (9a) de chacun des premier (2) et second moyen de redirection d'écoulement d'air (3), le côté court s'étendant essentiellement perpendiculairement à la direction s'étendant de la première partie d'extrémité (9a) à la seconde partie d'extrémité (9b), de façon que le côté court de la première partie d'extrémité (9a) du premier moyen de redirection d'écoulement d'air (2) fasse face à la première porte arrière (5) de la remorque (7) et de façon que le côté court de la première partie d'extrémité (9a) du second moyen de redirection d'écoulement d'air (3) fasse face à la seconde porte arrière (6) de la remorque (7) lorsque le premier (2) et le second moyen de redirection d'écoulement d'air (3) sont dans le mode actif, permettant de maintenir le premier (2) et le second moyen de redirection d'écoulement d'air (3) dans le mode actif.

2. Système de réduction de traînée pour remorques (1) suivant la revendication 1, dans lequel le premier groupe (8a) de dispositifs de liaison magnétique (8) sont agencés à la première partie d'extrémité (9a) du premier moyen de redirection d'écoulement d'air (2) pour coopérer avec plusieurs charnières (10) de la première porte arrière (5) de la remorque (7), lorsque le premier moyen de redirection d'écoulement d'air (2) est dans le mode actif, et dans lequel le premier groupe (8a) de dispositifs de liaison magnétique (8) sont agencés à la première partie d'extrémité (9a) du second moyen de redirection d'écoulement d'air (3) pour coopérer avec plusieurs charnières (10) de la seconde porte arrière (6) de la remorque (7), lorsque le second moyen de redirection d'écoulement d'air (3) est dans le mode actif, les charnières (10) reliant de manière articulée la première (5) et la seconde (6) portes arrière de la remorque (7) à une partie arrière (11) de la remorque (7).

3. Système de réduction de traînée pour remorques (1) suivant l'une quelconque des revendications 1-2, dans lequel le premier groupe (8a) de dispositifs de liaison magnétique (8) comprend plus de matériau magnétique dans une partie inférieure (12) de chacun des premier (2) et second moyen de redirection d'écoulement d'air (3) que dans une partie supérieure (13) de chacun des premier (2) et second moyen de redirection d'écoulement d'air (3), dans lequel la partie inférieure (12) de chacun des premier (2) et second moyen de redirection d'écoulement d'air (3) est plus près du sol que la partie supérieure (13) de chacun des premier (2) et second moyen de redirection d'écoulement d'air (3) lorsque les premier (2) et second moyen de redirection d'écoulement d'air (3) sont agencés respectivement à l'endroit de la première (5) et la seconde (6) portes arrière de la remorque (7), permettant une liaison magnétique relativement forte entre le premier moyen de redirection d'écoulement d'air (2) et lesdites plusieurs charnières (10) de la première porte arrière (5) de la remorque (7) et une liaison magnétique relativement forte entre le second moyen de redirection d'écoulement d'air (3) et lesdites plusieurs charnières (10) de la seconde porte arrière (6) de la remorque (7) tout en permettant à un utilisateur de déconnecter plus aisément le premier (2) et le second moyen de redirection d'écoulement d'air (3) à partir du mode actif.

4. Système de réduction de traînée pour remorques (1) suivant l'une quelconque des revendications 1-3, dans lequel lesdits plusieurs dispositifs de liaison magnétique (8) comprennent un second groupe (8b) de dispositifs de liaison magnétique (8) agencés à l'endroit d'un côté long à l'endroit d'une seconde partie d'extrémité (9b) de chacun des premier (2) et second moyen de redirection d'écoulement d'air (3), dans lequel la seconde partie d'extrémité (9b) du premier moyen de redirection d'écoulement d'air (2) est distale à partir de la première partie d'extrémité (9a) du premier moyen de redirection d'écoulement d'air (2) et dans lequel la seconde partie d'extrémité (9b) du second moyen de redirection d'écoulement d'air (3) est distale à partir de la première partie d'extrémité (9a) du second moyen de redirection d'écoulement d'air (3), et dans lequel le côté long du premier moyen de redirection d'écoulement d'air (2) fait face à la première porte arrière (5) de la remorque (7) lorsque le premier moyen de redirection d'écoulement d'air (2) est dans le mode inactif, et dans lequel le côté long du second moyen de redirection d'écoulement d'air (3) fait face à la seconde porte arrière (6) de la remorque (7) lorsque le second moyen de redirection d'écoulement d'air (3) est dans le mode inactif, permettant de maintenir le premier moyen de redirection d'écoulement d'air (2) en direction de la première porte arrière (5) dans le mode inactif et de maintenir le second moyen de redirection d'écoulement d'air (3) en direction de la seconde porte arrière (6) dans le mode inactif.

5. Système de réduction de traînée pour remorques (1) suivant l'une quelconque des revendications 1-4, dans lequel lesdites plusieurs ferrures d'assemblage (4) sont agencées pour être connectées à une partie d'extrémité (14) de chacune des première (5) et seconde (6) portes arrière de la remorque (7), dans lequel la partie d'extrémité (14) de la première porte arrière (5) de la remorque (7) est en proximité étroite desdites plusieurs charnières (10) de la première porte arrière (5) de la remorque (7), et dans lequel la partie d'extrémité (14) de la seconde porte arrière (6) de la remorque (7) est en proximité étroite desdites plusieurs charnières (10) de la seconde porte arrière (6) de la remorque (7).

6. Système de réduction de traînée pour remorques (1) suivant l'une quelconque des revendications 1-5, dans lequel chacune desdites plusieurs ferrures d'assemblage (4) comprend au moins un coude (15), permettant au premier moyen de redirection d'écoulement d'air (2) d'être en proximité étroite de la première porte arrière (5) de la remorque (7) et au second moyen de redirection d'écoulement d'air (3) d'être en proximité étroite de la seconde porte arrière (6) de la remorque (7) lorsque les premier (2) et second moyen de redirection d'écoulement d'air (3) sont dans le mode inactif.

7. Système de réduction de traînée pour remorques (1) suivant l'une quelconque des revendications 1-6, dans lequel chacun des premier (2) et second moyen de redirection d'écoulement d'air (3) comprend un dispositif de maintien à distance (16) agencé à l'endroit de la seconde partie d'extrémité (9b) de chacun des premier (2) et second moyen de redirection d'écoulement d'air (3), dans lequel le dispositif de maintien à distance (16) crée une distance entre le premier moyen de redirection d'écoulement d'air (2) et la première porte arrière (5) de la remorque (7), et dans lequel le dispositif de maintien à distance (16) crée une distance entre le second moyen de redirection d'écoulement d'air (3) et la seconde porte arrière (6) de la remorque (7), et dans lequel le dispositif de maintien à distance (16) comprend le second groupe (8b) de dispositifs de liaison magnétique (8).

8. Système de réduction de traînée pour remorques (1) suivant l'une quelconque des revendications 1-7, comprenant au moins un premier (17a) et un second (17b) dispositifs de connexion de sécurité, dans lequel chacun des premier (17a) et second (17b) dispositifs de connexion de sécurité comprend une première partie (18a) et une seconde partie (18b), et dans lequel la première partie (18a) du premier dispositif de connexion de sécurité (17a) est agencée à l'endroit de la première porte arrière (5) de la remorque (7) et que la seconde partie (18b) du premier dispositif de connexion de sécurité (17a) est agencée à l'endroit de la seconde partie d'extrémité (9b) du premier moyen de redirection d'écoulement d'air (2), et dans lequel la première partie (18a) du second dispositif de connexion de sécurité (17b) est agencée à l'endroit de la seconde porte arrière (6) de la remorque (7) et que la seconde partie (18b) du second dispositif de connexion de sécurité (17b) est agencée à l'endroit de la seconde partie d'extrémité (9b) du second moyen de redirection d'écoulement d'air (3), le premier dispositif de connexion de sécurité (17a) connectant de manière amovible le premier moyen de redirection d'écoulement d'air (2) à la première porte arrière (5) de la remorque (7) dans le mode inactif, et le second dispositif de connexion de sécurité (17b) connectant de manière amovible le second moyen de redirection d'écoulement d'air (3) à la seconde porte arrière (6) de la remorque (7) dans le mode inactif.

9. Système de réduction de traînée pour remorques (1) suivant l'une quelconque des revendications 1-8, comprenant un premier (19a) et un second (19b) dispositifs de connexion de sécurité rotatifs, dans lequel chacun des premier (19a) et second (19b) dispositifs de connexion de sécurité rotatifs comprend une première partie d'extrémité (20a) et une seconde partie d'extrémité (20b), et dans lequel la première partie d'extrémité (20a) du premier dispositif de connexion de sécurité rotatif (19a) est agencée pour être connectée de manière rotative à la première porte arrière (5) de la remorque (7) et dans lequel la première partie d'extrémité (20a) du second dispositif de connexion de sécurité rotatif (19b) est agencée pour être connectée de manière rotative à la seconde porte arrière (6) de la remorque (7), et dans lequel la seconde partie d'extrémité (20b) du premier dispositif de connexion de sécurité rotatif (19a) est connectée de manière amovible à la première partie d'extrémité (9a) du premier moyen de redirection d'écoulement d'air (2) et dans lequel la seconde partie d'extrémité (20b) du second dispositif de connexion de sécurité rotatif (19b) est connectée de manière amovible à la première partie d'extrémité (9a) du second moyen de redirection d'écoulement d'air (3), dans lequel le premier dispositif de connexion de sécurité rotatif (19a) connecte de manière amovible le premier moyen de redirection d'écoulement d'air (2) à la première porte arrière (5) de la remorque (7) dans le mode inactif et dans le mode actif, et dans lequel le second dispositif de connexion de sécurité rotatif (19b) connecte de manière amovible le second moyen de redirection d'écoulement d'air (3) à la seconde porte arrière (6) de la remorque (7) dans le mode inactif et dans le mode actif.

10. Système de de réduction de traînée pour remorques (1) suivant l'une quelconque des revendications 1-9, dans lequel le premier (2) et le second moyen de redirection d'écoulement d'air (3) sont des rectangles réalisés en un matériau métallique en feuille tel que l'aluminium extrudé.

11. Système de réduction de traînée pour remorques (1) suivant l'une quelconque des revendications 1-10, dans lequel le premier (2) et le second moyen de redirection d'écoulement d'air (3) sont des rectangles réalisés en un matériau comprenant une ou plus parmi les suivantes fibre de verre, fibre de carbone.

12. Système de réduction de traînée pour remorques (1) suivant l'une quelconque des revendications 1-11, dans lequel le premier (2) et le second moyen de redirection d'écoulement d'air (3) sont des rectangles comprenant des parties découpées (21) correspondant à plusieurs charnières (22) en saillie de la première (5) et la seconde (6) portes arrière.

13. Système de réduction de traînée pour remorques (1) suivant l'une quelconque des revendications 1-12, dans lequel lesdites plusieurs ferrures d'assemblage (4) sont réalisées en un matériau métallique en feuille tel que l'aluminium extrudé.
